# EUROPEAN PATENT APPLICATION

(11) **EP 4 603 963 A1**
(43) Date of publication of application: **20.08.2025**
(21) Application number: 23877017.6
(22) Date of filing: 28.08.2023
(51) Int. Cl.: G06F 3/16

(54) **ACOUSTIC DEVICE, ACOUSTIC CONTROL METHOD, AND ACOUSTIC CONTROL PROGRAM**

(30) Priority: 11.10.2022 JP 2022163389
(71) Applicant: Sony Group Corporation, Tokyo 108-0075 (JP)
(72) Inventor: TOKOZUME, Yuji, Tokyo 108-0075 (JP); TSUCHIYA, Shinpei, Tokyo 108-0075 (JP); MAKINO, Kenichi, Tokyo 108-0075 (JP); MATSUMOTO, Kyosuke, Tokyo 108-0075 (JP); HOMMA, Mizuha, Tokyo 108-0075 (JP); ITABASHI, Tetsunori, Tokyo 108-0075 (JP)
(74) Representative: 2SPL Patentanwälte PartG mbB
(86) International application number: PCT/JP2023/030851
(87) International publication number: WO 2024/080009

(57) **Abstract**

An acoustic device of an embodiment according to the present disclosure includes a detection unit that detects that a user utters a word during content reproduction, a first determination unit that determines whether control processing related to the content can be executed in a case where the utterance is detected by the detection unit; and a second determination unit that determines whether to execute the control processing related to the content by analyzing presence or absence of a predetermined motion by the user or correlation between the utterance and the content in first determination processing by the first determination unit.

## Description

### Field

The present disclosure relates to an acoustic device, an acoustic control method, and an acoustic control program that perform predetermined processing when detecting utterance of a user.

### Background

Some acoustic devices such as headphones having a noise canceling function have a function of detecting utterance of a user with a microphone, a vibration sensor, or the like and performing predetermined processing according to a detection result. For example, a certain acoustic device has a function of temporarily stopping the noise canceling function when the user utters a word in such a manner as not to disturb a conversation of the user using the device.

According to such a function, in a case where the utterance of the user is detected, not only the noise canceling function but also pausing of content being viewed, reduction of volume, or a change in sound image localization is also possible. Thus, even when viewing the content, the user can immediately start a conversation with another person without being disturbed by a voice of the content.

### Citation List

### Patent Literature

Patent Literature 1: Japanese Patent Application Laid-open No. 2011-97268

### Summary

### Technical Problem

According to the related art, even a user wearing headphones or earphones can easily respond to a conversation when being spoken to by another person.

On the other hand, in the related art, when the user sings a song along music content reproduced from the headphones, or the user performs pronunciation practice in accordance with language learning content, there is a possibility of detection thereof as an utterance. In this case, since reproduction of the content is stopped at timing not intended by the user, there is a risk of hindering utilization by the user.

Thus, the present disclosure proposes an acoustic device, an acoustic control method, and an acoustic control program capable of performing acoustic control more excellent in user experience.

### Solution to Problem

In order to solve the above problems, an acoustic device of an embodiment according to the present disclosure includes a detection unit that detects that a user utters a word during content reproduction, a first determination unit that determines whether control processing related to the content can be executed in a case where the utterance is detected by the detection unit; and a second determination unit that determines whether to execute the control processing related to the content by analyzing presence or absence of a predetermined motion by the user or correlation between the utterance and the content in first determination processing by the first determination unit.

### Brief Description of Drawings

FIG. 1 is a view illustrating an outline of acoustic control processing according to an embodiment.
FIG. 2 is a block diagram illustrating the outline of the acoustic control processing according to the embodiment.
FIG. 3 is a view illustrating an example of a sensor position of an acoustic device according to the embodiment.
FIG. 4 is a view illustrating another example of the sensor position of the acoustic device according to the embodiment.
FIG. 5 is a flowchart illustrating a procedure of the acoustic control processing according to the embodiment.
FIG. 6 is a view illustrating a configuration example of the acoustic device according to the embodiment.
FIG. 7 is a block diagram illustrating an outline of acoustic control processing according to a first modification example.
FIG. 8 is a flowchart illustrating a procedure of the acoustic control processing according to the first modification example.
FIG. 9 is a block diagram illustrating an outline of acoustic control processing according to a second modification example.
FIG. 10 is a flowchart illustrating a procedure of the acoustic control processing according to the second modification example.
FIG. 11 is a block diagram illustrating an outline of acoustic control processing according to a third modification example.
FIG. 12 is a flowchart illustrating a procedure of the acoustic control processing according to the third modification example.
FIG. 13 is a view (1) for describing a configuration of a neural network according to the third modification example.
FIG. 14 is a view (2) for describing the configuration of the neural network according to the third modification example.
FIG. 15 is a block diagram illustrating an outline of acoustic control processing according to a fourth modification example.
FIG. 16 is a view for describing presentation processing according to the fourth modification example.
FIG. 17 is a flowchart illustrating a procedure of the acoustic control processing according to the fourth modification example.
FIG. 18 is a block diagram illustrating an outline of acoustic control processing according to a fifth modification example.
FIG. 19 is a flowchart illustrating a procedure of the acoustic control processing according to the fifth modification example.
FIG. 20 is a hardware configuration diagram illustrating an example of a computer that realizes functions of the acoustic device.

### Description of Embodiments

In the following, embodiments of the present disclosure will be described in detail on the basis of the drawings. Note that in the following embodiments, overlapped description is omitted by assignment of the same reference sign to same parts.

The present disclosure will be described in the following order of items.
1. Embodiment
1-1. Outline of acoustic control processing according to the embodiment
1-2. Procedure of the acoustic control processing according to the embodiment
1-3. Configuration of an acoustic device according to the embodiment
1-4. Modification example according to the embodiment
1-4-1. Determination based on timing synchronization
1-4-2. Determination based on matching of feature amounts
1-4-3. Determination using input of utterance and content
1-4-4. Feedback by user operation
1-4-5. Feedback by gesture
1-4-6. Determination based on a content attribute and a viewing mode
1-4-7. Mode of a function to be controlled
2. Other embodiments
3. Effect of an acoustic device according to the present disclosure
4. Hardware configuration

### (1. Embodiment)

### (1-1. Outline of acoustic control processing according to the embodiment)

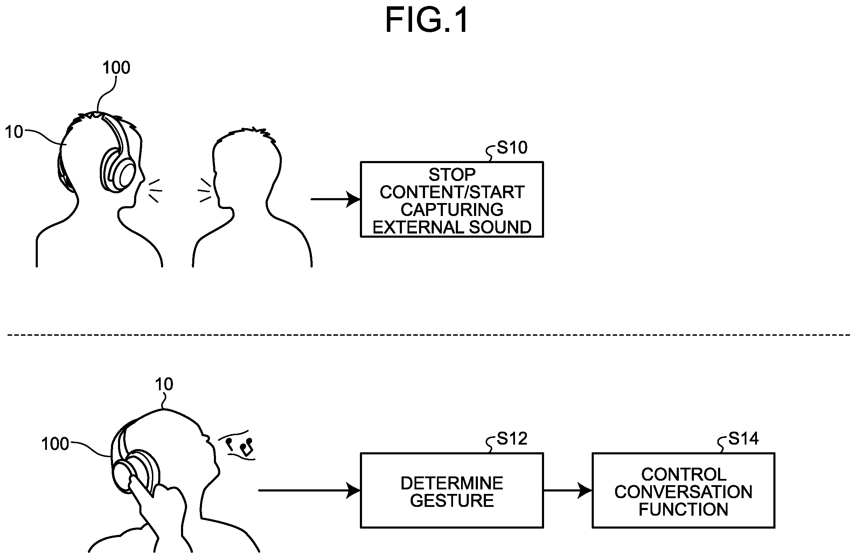

First, an outline of acoustic control processing according to the embodiment will be described with reference to FIG. 1. FIG. 1 is a view illustrating the outline of the acoustic control processing according to the embodiment.

The acoustic control processing according to the embodiment is executed by an acoustic device 100 illustrated in FIG. 1. The acoustic device 100 is, for example, equipment having an acoustic output function, such as headphones or earphones. Furthermore, the acoustic device 100 includes a microphone or the like to realize a noise canceling function. It is assumed in the embodiment that the acoustic device 100 is overhead-type headphones and is worn by a user 10.

The acoustic device 100 outputs reproduced content such as music. For example, the acoustic device 100 receives an acoustic signal of the content from content reproduction equipment (not illustrated in FIG. 1) and outputs the received acoustic signal. The content reproduction equipment is, for example, a music reproduction player having a communication function, a smartphone, or the like.

Furthermore, the acoustic device 100 according to the embodiment has a function of detecting whether the user 10 utters a word during content reproduction, and starting predetermined processing in a case where the utterance is detected. The utterance detection is realized by utilization of, for example, a microphone having a beam forming function, a vibration sensor that detects movement of a head and a palate of the user 10, or the like. Specifically, utterance detection processing can be configured by utilization of a neural network. For example, the acoustic device 100 detects whether the user 10 utters a word on the basis of whether a numerical value (such as a value from 0 to 1) that represents a probability that the user 10 is currently uttering a voice and that is output from the neural network satisfies a predetermined condition. The predetermined condition is, for example, that a state in which an output of the neural network is higher than a predetermined threshold lasts for a predetermined period.

Then, in an example illustrated in an upper portion of FIG. 1, in a case where the utterance of the user 10 is detected, the acoustic device 100 pauses the content and shifts the noise canceling function to an external-sound capturing function (Step S10). The external-sound capturing function is a function of outputting, from an output unit of the acoustic device 100, an external sound detected by the microphone and normally canceled in the noise canceling function. As described above, by stopping the content and capturing the external sound, the user 10 can have a conversation with another person without any trouble without manually stopping the content or removing the acoustic device 100. Note that in the following description, a function of temporarily shifting to a mode suitable for conversation with detection of the utterance as a trigger is referred to as a "conversation function". The conversation function is not limited to the mode illustrated in FIG. 1, and may be, for example, various modes such as temporarily decreasing a reproduction volume of the content or only turning off the noise canceling function instead of capturing the external sound.

That is, the acoustic device 100 according to the embodiment is a voice output device that detects an utterance of the user 10 who is a wearer with the microphone, the vibration sensor, or the like, and performs some kind of processing ("conversation function" in this example) according to the result. According to the conversation function, since being able to enjoy a short conversation with a nearby person while listening to music, the user 10 can enjoy excellent user experience.

On the other hand, for example, in a case where the user 10 sings along music content reproduced from the headphones or the user 10 performs pronunciation practice (referred to as shadowing or the like) in accordance with language learning content, the conversation function may operate against intention of the user 10. Thus, conventionally, in a case of using equipment having the conversation function, the user 10 has been required to set the conversation function not to operate in a case of singing or performing pronunciation practice as described above.

Thus, the acoustic device 100 according to the present disclosure appropriately achieves both the conversation function and the utterance detection by the processing described below. Specifically, in a case where it is detected that the user 10 utters a word during the content reproduction and control processing of the conversation function is to be performed, the acoustic device 100 determines whether a predetermined motion (gesture) is being made by the user 10. Then, in a case where the predetermined motion is made, the acoustic device 100 performs control in such a manner as not to operate the conversation function. As a result, without the user 10 manually turning on or off the conversation function, the acoustic device 100 can turn on or off the conversation function at appropriate timing according to a case. As a result, the user 10 can also utter a sound in accordance with the content while enjoying an advantage of the original conversation function.

Hereinafter, an outline of the processing according to the embodiment will be described with reference to a lower portion of FIG. 1. In the example illustrated in the lower portion of FIG. 1, it is assumed that the user 10 sings a song along the content reproduced from the acoustic device 100 while wearing the acoustic device 100.

Since the singing motion of the user is detected as the utterance, the acoustic device 100 attempts to operate control processing of pausing the content. At this time, the acoustic device 100 determines whether the user 10 is making a predetermined gesture defined in advance (Step S12).

The predetermined gesture defined in advance is a mode of a motion of the user 10 which motion is prescribed in advance in such a manner as not to operate the conversation function. Specifically, an example of the gesture is a motion in which the user 10 touches a touch sensor unit used to operate the acoustic device 100. In the example of the lower portion of FIG. 1, the user 10 sings a song while touching the touch sensor unit outside a right output unit (housing) of the acoustic device 100. Such a motion corresponds to the predetermined gesture defined in advance.

In this case, the acoustic device 100 controls the activation of the conversation function (Step S14). That is, in a case where the user 10 is uttering a word while touching the touch sensor unit, the acoustic device100 determines that the user 10 is in a state of intentionally controlling the conversation function, and does not activate the conversation function. On the other hand, in a case where the user 10 utters a word without touching the touch sensor unit, the acoustic device 100 may activate the conversation function. As described above, the user 10 can control the activation of the conversation function on the basis of a simple gesture or a natural gesture during singing of a song. As a result, the acoustic device 100 can provide the acoustic control with high user satisfaction and more excellent user experience.

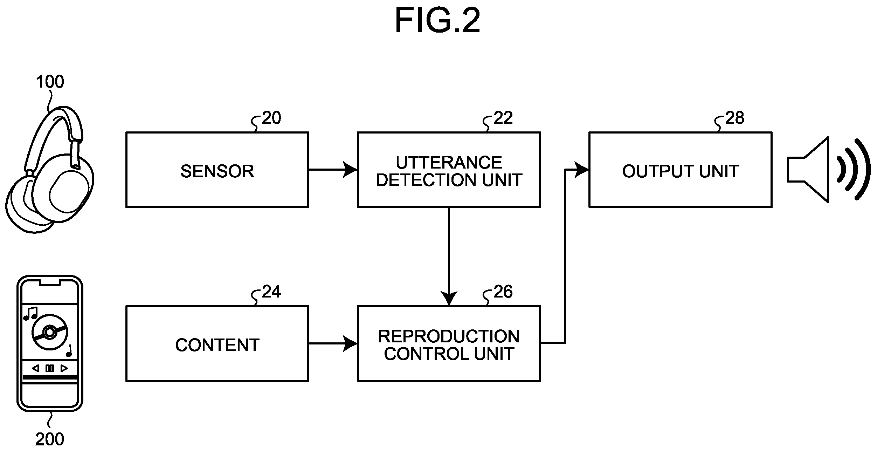

Next, a flow of the acoustic control processing according to the embodiment is illustrated in a conceptual block diagram in FIG. 2. FIG. 2 is a block diagram illustrating an outline of the acoustic control processing according to the embodiment.

In the example illustrated in FIG. 2, the acoustic device 100 performs utterance detection by an utterance detection unit 22 by using a sensor 20 included in the own device. The sensor 20 is, for example, a microphone, a vibration sensor, or the like. Note that the utterance detection unit 22 is an example of a processing unit conceptually indicating an information processing function of the acoustic device 100.

Furthermore, content reproduction equipment 200 transmits a content 24 stored in the own device or acquired via a network to the acoustic device 100. At this time, when the acoustic device 100 detects the utterance, the content reproduction equipment 200 controls a reproduction control unit 26 to pause the reproduction. Alternatively, even when the acoustic device 100 detects the utterance, the reproduction control unit 26 performs control in such a manner as not to pause the reproduction in a case where a specific gesture is detected at the same time.

Then, an output unit 28 of the acoustic device 100 outputs a voice of the content from the output unit 28 according to a result of the control by the reproduction control unit 26. The output unit 28 is a processing unit that actually outputs the voice in the acoustic device 100, and corresponds to, for example, a diaphragm or the like for a voice output.

Note that in FIG. 2, a general configuration example in which upper components are on a side of the acoustic device 100 (such as the headphones) and lower components are on a side of the content reproduction equipment 200 (host device connected to headphones, such as a smartphone). That is, although the acoustic device 100 and the content reproduction equipment 200 are illustrated as separate devices in FIG. 2, a system configuration according to the embodiment is not limited to this example. For example, the acoustic device 100 according to the embodiment may perform, by the own device, reproduction control of content stored in the own device or content acquired via a network and perform the utterance detection. That is, in a case where the acoustic device 100 is headphones of a type that stores the content in the own device, all the components illustrated in FIG. 2 may be completed in the acoustic device 100 that is the headphones. Furthermore, although an example in which the utterance detection unit 22 is installed inside the acoustic device 100 is illustrated in FIG. 2, the utterance detection may be executed in a configuration in which a sensor signal is transmitted to a side of the host (content reproduction equipment 200) and the utterance detection is performed on the side of the host. That is, the configuration described in the embodiment is not limited, and any configuration may be used as long as the processing is realized by cooperation of processing units provided in arbitrary equipment. The same applies to modification examples described later.

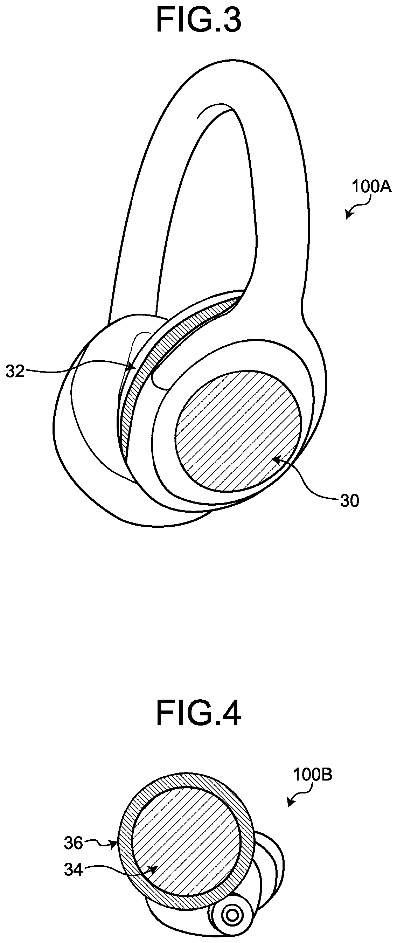

Next, an example of a sensor position of the acoustic device 100 according to the embodiment will be described with reference to FIG. 3 and FIG. 4. FIG. 3 is a view illustrating an example of a sensor position of the acoustic device 100 according to the embodiment.

As illustrated in FIG. 3, in a case where the acoustic device 100 is overhead-type headphones 100A, a touch sensor 30 to be used for the operation corresponds to an exterior portion of the housing. Alternatively, the headphones 100A may include a touch sensor 32 on an outer ring portion of the housing.

Next, an arrangement example of a sensor in a case where the acoustic device 100 has another shape is illustrated in FIG. 4. FIG. 4 is a view illustrating another example of the sensor position of the acoustic device 100 according to the embodiment.

As illustrated in FIG. 4, in a case where the acoustic device100 is a canal-type wireless earphone 100B, a touch sensor 34 to be used for the operation corresponds to an exterior portion attached to an auricle. Alternatively, the wireless earphone 100B may include a touch sensor 36 on an outer ring portion of an exterior portion.

Note that the sensor positions illustrated in FIG. 3 and FIG. 4 are merely examples, and the acoustic device 100 may include sensors at various positions in accordance with a shape and a use.

### (1-2. Procedure of the acoustic control processing according to the embodiment)

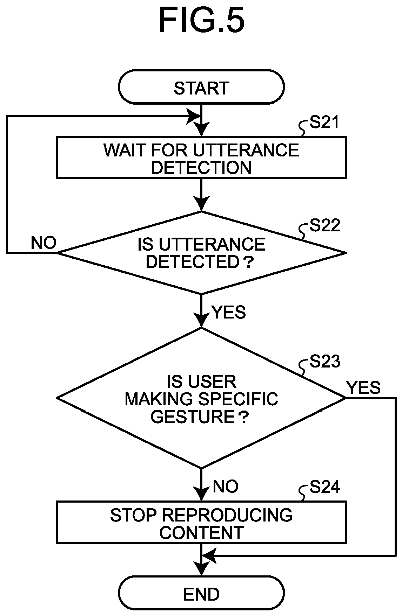

Next, a procedure of the acoustic control processing according to the embodiment will be described with reference to FIG. 5. FIG. 5 is a flowchart illustrating the procedure of the acoustic control processing according to the embodiment.

While reproducing the content, the acoustic device 100 operates an utterance detection function and waits for detection of an utterance (Step S21). Then, the acoustic device 100 determines whether the utterance is detected (Step S22). In a case where the utterance is not detected (Step S22; No), the acoustic device 100 continues the utterance detection.

On the other hand, in a case where the utterance is detected (Step S22; Yes), the acoustic device 100 determines whether the user is making a specific gesture (Step S23).

In a case where the user is not making the specific gesture (Step S23; No), the acoustic device 100 operates the conversation function and stops reproducing the content (Step S24). On the other hand, in a case where the user is making the specific gesture (Step S23; Yes), the acoustic device 100 does not operate the conversation function, and ends the processing of this time. At this time, in a case where the content reproduction continues, the acoustic device 100 may return the processing to Step S21.

As described above with reference to FIG. 1 to FIG. 5, the acoustic device 100 can define the specific gesture in advance and prevent the processing corresponding to the utterance detection (conversation function) from operating while the user 10 performs the specific gesture. As a result, when desiring to utter a sound according to the content, by performing the gesture with intention, the user 10 can utter a sound according to the content without activating the processing corresponding to the utterance detection. Furthermore, while not making the gesture, the user 10 can enjoy a benefit of the processing corresponding to the utterance detection. Note that since being a simple gesture of touching the touch sensor of the housing exterior portion and also being a natural gesture in singing, a gesture of pressing the housing portion with a hand is less burdensome to the user 10. Thus, the user 10 can cause the processing according to the present embodiment to be executed by the natural motion in uttering a sound.

Incidentally, the gesture of touching the touch sensor unit located outside the housing of the headphones may be assigned to temporary switching to an external-sound capturing mode. As described above, the external-sound capturing mode is a function of enabling the user to check a surrounding sound by collecting the surrounding sound with the microphone and outputting the sound from the headphones, and is used when the user desires to temporarily check the surrounding sound in the noise canceling headphones. Such headphones have a specification that transition from the noise canceling mode to the external-sound capturing mode is temporarily made when the user touches the touch sensor of the housing, and the mode returns to the noise canceling mode again when the user releases the hand from the touch sensor.

Here, the specification that "the processing (conversation function) corresponding to the utterance detection is not performed while the touch sensor of the housing is touched" which specification is described in the embodiment may be combined with the specification of the external-sound capturing mode. That is, the acoustic device 100 may have a specification to temporarily transition to the external-sound capturing mode and not to operate the conversation function while the user 10 touches the touch sensor of the housing. Although it seems that the two specifications conflict with each other, it may be convenient for the user 10 to transition to the external-sound capturing mode because the user 10 often wants to check his/her voice when performing the utterance according to the content.

Note that the acoustic device 100 may prescribe another gesture in order to avoid conflict with an existing gesture. For example, the acoustic device 100 may determine the number of fingers touching the touch sensor or whether the user 10 touches a position different from the touch sensor used for determination of the transition to the external-sound capturing mode. Alternatively, the acoustic device 100 may add a touch sensor dedicated to a gesture according to the embodiment in addition to the positions illustrated in FIG. 3 and FIG. 4.

Note that as another example of the gesture for limiting the conversation function, the acoustic device 100 may detect that "the user 10 brings his/her hand close to the housing". For example, the acoustic device 100 may detect the gesture of the user 10 by using a sensor (such as an infrared sensor) for detecting an object that does not come into physical contact.

Furthermore, the acoustic device 100 may detect predetermined operation as the motion of the user 10. That is, the acoustic device 100 may determine whether to execute the conversation function by analyzing whether the user 10 presses an operation unit (such as an operation button) to control the acoustic device 100 or content. For example, the acoustic device 100 may use, as a determination criterion for controlling the conversation function, pressing by the user 10 on an operation button on a side surface of the acoustic device 100 or a touch panel of a smartphone, a smart watch, or the like linked with the acoustic device 100.

Furthermore, the acoustic device 100 may control the conversation function not only while the user 10 performs the gesture but also for a predetermined period after the gesture is performed or until the content being reproduced ends after the gesture is performed. As a result, the user 10 is not required to continuously perform the specific gesture while performing the utterance according to the content. Furthermore, conversely, the acoustic device 100 may perform the processing corresponding to the utterance detection only while the user 10 performs the specific gesture.

### (1-3. Configuration of an acoustic device according to the embodiment)

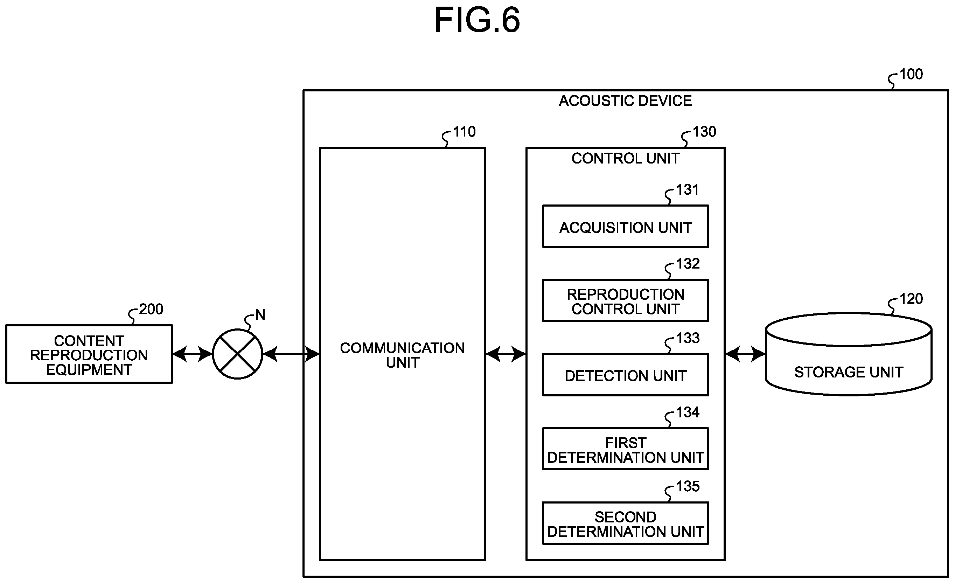

Next, a configuration of the acoustic device 100 according to the embodiment will be described with reference to FIG. 6. FIG. 6 is a view illustrating a configuration example of the acoustic device 100 according to the embodiment.

As illustrated in FIG. 6, the acoustic device 100 includes a communication unit 110, a storage unit 120, and a control unit 130. Note that the acoustic device 100 may include an input unit (such as a touch sensor unit) that receives various kinds of operation from the user or the like who operates the acoustic device 100, and a display unit (such as a liquid crystal display) to display various kinds of information.

The communication unit 110 is realized by, for example, a network interface card (NIC), a network interface controller, or the like. The communication unit 110 is connected to the network N in a wired or wireless manner, and transmits and receives information to and from the content reproduction equipment 200 and the like via the network N. The network N is realized by, for example, a wireless communication standard or system such as Bluetooth (registered trademark), the Internet, Wi-Fi (registered trademark), ultra wide band (UWB), or low power wide area (LPWA).

The storage unit 120 is realized by a semiconductor memory element such as a random access memory (RAM) or a flash memory, or a storage device such as a hard disk or an optical disk, for example. For example, the storage unit 120 stores data such as content reproduced by the acoustic device 100.

The control unit 130 is realized, for example, when a program (such as acoustic control program according to the present disclosure) stored in the acoustic device 100 is executed by a central processing unit (CPU), a micro processing unit (MPU), or the like with a random access memory (RAM) or the like as a work area. Also, the control unit 130 is a controller, and may be realized by an integrated circuit such as an application specific integrated circuit (ASIC) or a field programmable gate array (FPGA), for example.

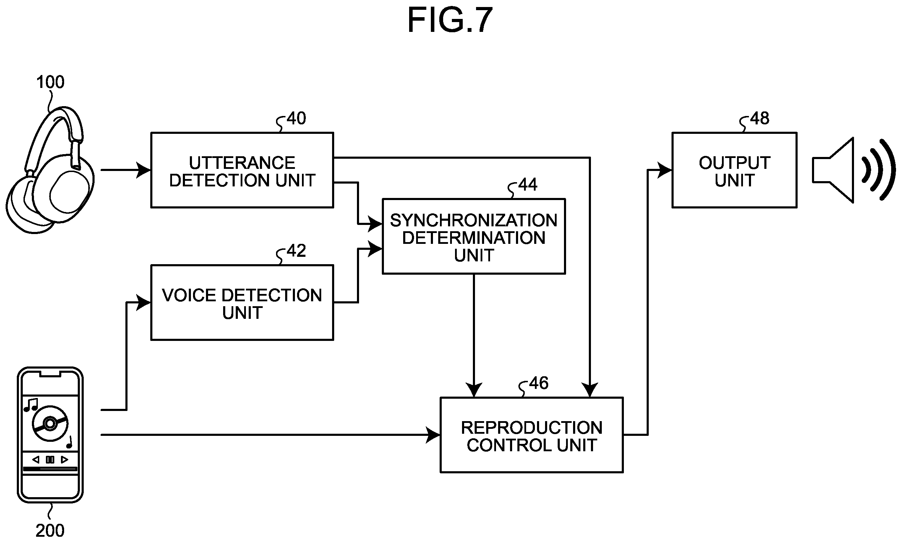

As illustrated in FIG. 6, the control unit 130 includes an acquisition unit 131, a reproduction control unit 132, a detection unit 133, a first determination unit 134, and a second determination unit, and realizes or executes a function and an action of information processing described below. Note that an internal configuration of the control unit 130 is not limited to the configuration illustrated in FIG. 6, and may be another configuration as long as being a configuration of performing the information processing described later. Furthermore, although the acoustic device 100 includes the reproduction control unit 132 in FIG. 6, the content reproduction equipment 200 may include the reproduction control unit 132 and the like as described above. In this case, the information processing according to the embodiment is realized by cooperation of the acoustic device 100 and the content reproduction equipment 200. That is, the control unit 130 collectively refers to processing units conceptually indicating information processing, such as the utterance detection unit 22 and the reproduction control unit 26 illustrated in FIG. 2. Similarly, the control unit 130 also corresponds to each of processing units illustrated in FIG. 7, FIG. 9, FIG. 11, FIG. 15, and FIG. 18 (described later).

The acquisition unit 131 acquires various kinds of information. For example, the acquisition unit 131 acquires data of content reproduced by the acoustic device 100 from the content reproduction equipment 200. Furthermore, the acquisition unit 131 acquires various kinds of setting information such as a definition of a gesture for controlling the conversation function. For example, the acquisition unit 131 acquires the various kinds of setting information by receiving the various kinds of setting information provided from an administrator or the like of the acoustic device 100 via the network N.

The reproduction control unit 132 controls reproduction of content. For example, the reproduction control unit 132 reads content data stored in the storage unit 120, and performs control in such a manner that a voice signal corresponding to the read data is output from the output unit of the acoustic device 100.

Furthermore, the reproduction control unit 132 controls reproduction of content in response to a request from the user 10. For example, the reproduction control unit 132 responds to the request from the user 10 to stop the reproduction, increase or decrease the volume, or view other content, and controls the reproduction mode. Furthermore, in a case where the detection unit 133 detects the utterance of the user 10 and the conversation function is activated, the reproduction control unit 132 performs control such as pausing the content or reducing the volume.

The detection unit 133 detects an event observed around the acoustic device 100 and a motion such as operation on the acoustic device 100 by using various sensors. For example, the detection unit 133 detects that the user 10 utters a word during content reproduction by using the microphone or the vibration sensor.

Furthermore, by using the touch sensor or the infrared sensor, the detection unit 133 may detect that the user 10 makes the predetermined motion for controlling the conversation function. For example, the detection unit 133 detects that the user 10 is making the predefined gesture such as touching the exterior portion of the acoustic device 100 during content reproduction.

In a case where the utterance is detected by the detection unit 133, the first determination unit 134 determines whether the control processing related to the content can be executed. The control processing related to the content is, for example, various kinds of control useful for the user 10 to have a conversation with another person, such as pausing the content or activating the external-sound capturing function in a case where the utterance of the user 10 is detected. That is, in a case where the utterance of the user 10 is detected, the first determination unit 134 determines whether to activate the conversation function.

In the first determination processing by the first determination unit 134, a second determination unit 135 determines whether to execute the control processing related to the content by analyzing presence or absence of the predetermined motion by the user 10. That is, according to a situation of the user 10, the second determination unit 135 redetermines whether to actually activate the conversation function to be activated by the first determination unit 134.

Specifically, the second determination unit 135 determines whether to execute the control processing related to the content by analyzing whether the user 10 touches the touch sensor unit to control the acoustic device 100 as the predetermined motion by the user 10. For example, as illustrated in FIG. 1, in a case where the user 10 is singing while touching the outside of the housing of the headphones with a hand, the second determination unit 135 determines that the motion is a gesture for controlling the conversation function, and performs control in such a manner as not to activate the conversation function.

Furthermore, the second determination unit 135 may determine whether to execute the control processing related to the content by analyzing whether the user 10 brings the hand close to a predetermined portion of the acoustic device 100 as a predetermined motion by the user 10. That is, in a case where the user 10 makes the predefined motion such as holding the hand within a predetermined distance from the sensor unit of the acoustic device 100 even when the user 10 does not actually touch the acoustic device 100 with the hand, the second determination unit 135 may perform control in such a manner as not to activate the conversation function on the basis of such a motion.

Furthermore, the second determination unit 135 may determine whether to execute the control processing related to the content by analyzing whether the user 10 presses an operation unit to control the acoustic device 100 or the content as the predetermined motion by the user 10. For example, in a case where a motion such that the user 10 presses a specific operation button included in the acoustic device 100 or operates a content reproduction application, the second determination unit 135 may perform control in such a manner as not to activate the conversation function on the basis of such a motion.

Note that such a motion is not necessarily for the acoustic device 100, and may be a motion for the content reproduction equipment 200 realized by the smartphone or the smartwatch. Furthermore, such a motion does not necessarily involve pressing of a button, and may be, for example, a motion such as whether the user 10 is viewing a script (such as lyrics) of content displayed on the smartphone. In this case, the sensor corresponds to a line-of-sight detection function and a face detection function by a camera mounted on the smartphone.

### (1-4. Modification example according to the embodiment)

The information processing according to the embodiment described above may be accompanied by various modifications. Modification examples of the embodiment will be described in the following.

In the above embodiment, the gesture of the user 10 is taken as an example of the trigger for the acoustic device 100 to control the conversation function. However, the acoustic device 100 may control the conversation function on the basis of other determination criteria. Hereinafter, as modification examples of the embodiment, an example in which the acoustic device 100 controls the conversation function on the basis of various determination criteria will be listed.

### (1-4-1. Determination based on timing synchronization)

An acoustic device 100 may determine whether to control a conversation function on the basis of synchronization between timing of an utterance of a user 10 and timing of an output of a voice signal included in content. This example will be described with reference to FIG. 7 and subsequent drawings.

FIG. 7 is a block diagram illustrating an outline of acoustic control processing according to a first modification example. In FIG. 7, an example in which the acoustic device 100 or content reproduction equipment 200 temporarily controls the conversation function by determining synchronization between the utterance of the user 10 and the content is illustrated. That is, in a case where the user 10 sings or performs shadowing along the content being reproduced, it is assumed that a start of voice included in the content and timing of the utterance of the user 10 substantially match. Thus, such synchronization is used as a determination criterion in the first modification example.

Note that it may be technically difficult to discriminate between an utterance in accordance with the content and other utterances only with a sensor signal from a microphone, a vibration sensor, or the like. Thus, the acoustic device 100 enables the discrimination by utilizing information of the content being reproduced.

As illustrated in FIG. 7, the acoustic device 100 continues utterance detection processing by an utterance detection unit 40 during content reproduction. In addition, a voice detection unit 42 according to the content reproduction equipment 200 analyzes the content provided from the content reproduction equipment 200, and determines in real time whether voice is included in the content being reproduced at this point. Note that the voice detection unit 42 may include a neural network similarly to the utterance detection unit 40.

Then, a synchronization determination unit 44 compares timing of an output of the utterance detection unit 40 with timing of an output of the voice detection unit 42. For example, in a case where it is determined that the two perform the output at timing within a predetermined threshold, the synchronization determination unit 44 determines that the user 10 utters a sound in accordance with the voice included in the content. That is, the synchronization determination unit 44 determines whether timing at which the output of the utterance detection unit 40 changes from a state of being "absent" to "present" and timing at which the output of the voice detection unit 42 changes from a state of being "absent" to "present" are substantially the same. More specifically, the synchronization determination unit 44 determines whether the timing of the two match within a predetermined time width.

Then, a reproduction control unit 46 controls the reproduction of the content on the basis of the output of the utterance detection unit 40 and the output of the synchronization determination unit 44. For example, in a case where the output of the utterance detection unit 40 is "present" and the output of the synchronization determination unit 44 is "absent", the reproduction control unit 46 determines that the user 10 utters a sound as a conversation instead of the utterance according to the content, and stops the content being reproduced. On the other hand, in a case where the output of the utterance detection unit 40 is "present" and the output of the synchronization determination unit 44 is "present", the reproduction control unit 46 determines that the user 10 utters a sound in accordance with the content and performs control in such a manner as not to stop the content being reproduced.

Then, an output unit 48 of the acoustic device 100 outputs the voice of the content from the output unit 48 according to a result of the control by the reproduction control unit 46.

Note that music data or the like of the content being reproduced in the acoustic device 100 can be pre-read by the content reproduction equipment 200 or the acoustic device 100. Thus, the voice detection unit 42 can perform voice detection processing in advance of a portion ahead of a current reproduction position in the content. As a result, the acoustic device 100 can prevent a processing delay and distribute a processing load.

Furthermore, the acoustic device 100 may acquire information of timing at which voice is included in the content from meta information of music or from an external database or the like accumulated in advance.

Furthermore, the acoustic device 100 may change a parameter of a determination criterion in the synchronization determination unit 44 according to a type of the content being reproduced. For example, in a case where the content being reproduced is music content, the acoustic device 100 may set a threshold of timing of the start of the voice included in the content and the start of the utterance (singing voice) of the user 10 to be extremely short. This is because it is assumed for a song that the user 10 utters a sound almost simultaneously with the content. On the other hand, in a case where the content being reproduced is content for language learning, the acoustic device 100 may assume that the utterance of the user is slightly delayed with respect to the start of the voice included in the content, and may set the threshold for synchronization determination of the timing to be long as compared with a case of the music content. This is because, as a mode of language practice such as shadowing, it is assumed that the user 10 utters a sound slightly later than the reproduction of the content. Note that each of the processing units (such as the voice detection unit 42 and the synchronization determination unit 44) illustrated in FIG. 7 may be included in the acoustic device 100 as in FIG. 2, or may be included in the content reproduction equipment 200.

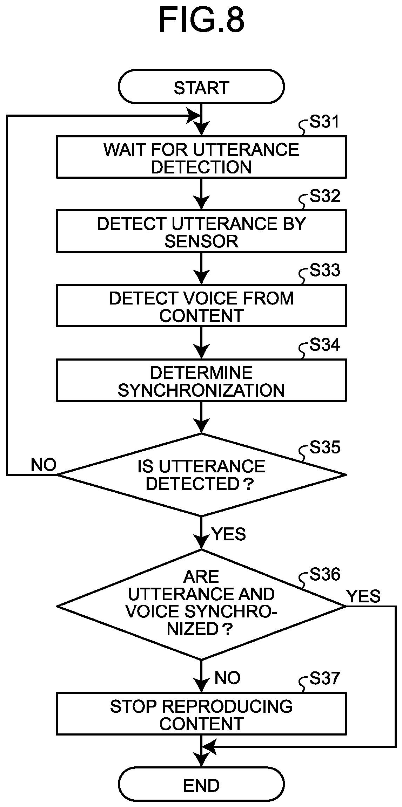

Next, a procedure of the acoustic control processing according to the first modification example will be described with reference to FIG. 8. FIG. 8 is a flowchart illustrating the procedure of the acoustic control processing according to the first modification example.

While reproducing the content, the acoustic device 100 operates an utterance detection function by a sensor and waits for detection of an utterance (Step S31). That is, the acoustic device 100 performs utterance detection by the sensor (Step S32). Furthermore, the acoustic device 100 continues processing of detecting whether voice is included in the content being reproduced (Step S33).

Then, the acoustic device 100 performs synchronization determination as to whether timing of the two detected in Step S32 and Step S33 coincides with each other (Step S34). During this time, the acoustic device 100 determines whether the utterance by the user 10 is detected (Step S35). In a case where the utterance is not detected (Step S35; No), the acoustic device 100 continues the utterance detection.

On the other hand, in a case where the utterance is detected (Step S35; Yes), the acoustic device 100 further determines whether the utterance and the voice are synchronized with each other (Step S36). In a case where the utterance and the voice are not synchronized with each other (Step S36; No), the acoustic device 100 operates the conversation function and stops reproducing the content (Step S37). On the other hand, in a case where the utterance and the voice are synchronized with each other (Step S36; Yes), the acoustic device 100 does not operate the conversation function and ends the current processing. At this time, in a case where the content reproduction continues, the acoustic device 100 may return the processing to Step S31.

As described above, in first determination processing by a first determination unit 134, a second determination unit 135 according to the first modification example analyzes correlation between the utterance and the content, and determines whether to execute control processing related to the content. For example, as the correlation between the utterance and the content, the second determination unit 135 determines whether to execute the control processing related to the content on the basis of a matching degree of the timing of the voice included in the content and the utterance.

As a result, the user 10 can control activation of the conversation function only by uttering a word at substantially the same timing as the voice included in the content without making a specific gesture, and can control the conversation function in a natural mode.

### (1-4-2. Determination based on matching of feature amounts)

Next, as a second modification example, processing in which an acoustic device 100 determines whether to control a conversation function on the basis of matching between feature amounts of a voice included in content and an utterance will be described.

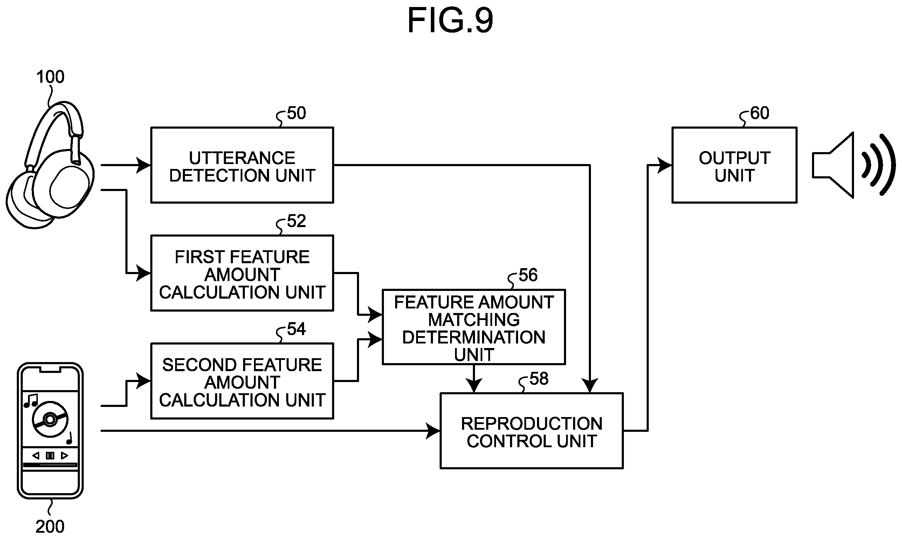

That is, in a case where a user 10 utters a sound according to the content being reproduced, the acoustic device 100 focuses on similarity between a feature amount of the content and a feature amount of the utterance of the user, and varies control related to the content on the basis of the feature amounts. This processing is illustrated in FIG. 9 and subsequent drawings.

FIG. 9 is a block diagram illustrating an outline of acoustic control processing according to the second modification example. As illustrated in FIG. 9, the acoustic device 100 continues utterance detection processing by an utterance detection unit 50 during content reproduction. In addition, a first feature amount calculation unit 52 that calculates a feature amount related to an utterance analyzes the utterance by the user 10 and calculates a feature amount thereof. In addition, a second feature amount calculation unit 54 analyzes data of the content and calculates a feature amount thereof.

That is, the acoustic device 100 calculates the feature amount of each of the utterance (that is, a sensor signal) and the content (that is, a content signal). The feature amount is, for example, a musical element in a voice, and is pitch, a tone, a chord, rhythm, or the like of the voice. Furthermore, the feature amount may include utterance contents and semantic contents (text information) such as lyrics of the content. These feature amounts can be calculated on the basis of voice or music analysis, a known method of analyzing text for which voice is recognized, or the like. Note that as a feature amount used for information processing, only a single feature amount may be used, or a plurality of kinds may be combined.

A feature amount matching determination unit 56 determines a matching degree between an output of the first feature amount calculation unit 52 and an output of the second feature amount calculation unit 54. That is, the feature amount matching determination unit 56 determines how much the feature amount of the sensor signal acquired by the sensor of the acoustic device 100 is similar to the feature amount acquired from the signal of the content itself. Then, in a case where the matching degree is equal to or greater than a predetermined threshold, the feature amount matching determination unit 56 determines that the feature amounts match.

As an example, in a case where the feature amount is the **"pitch",** the feature amount matching determination unit 56 calculates the pitch for the sensor signal and the content signal at certain time intervals, and determines, in a case where a difference therebetween is equal to or smaller than a predetermined threshold, that the two match. As described above, the acoustic device 100 determines that probability that the user 10 is singing along the content is high on the basis of matching between the pitch of the utterance of the user 10 and that of the voice of the content.

Note that the user 10 may sing a song in a different octave, or may sing at an interval having harmony with the voice of the content. Thus, the acoustic device 100 may adjust a determination criterion such as scoring in such a manner that the feature amount matching determination unit 56 can determine that the two "match" even in a case where the pitches of the both are different for the octave or have a chord relationship (such as major third or minor third).

Furthermore, in a case where the feature amount is the "tone" or "chord", the feature amount matching determination unit 56 determines whether the tone or chord of the sensor signal (utterance of the user 10) matches the tone or chord of the content. As an example, in a case where the content is music in C major, the feature amount matching determination unit 56 may determine that the feature amounts match in a case where the utterance of the user 10 includes a scale in C major, and may determine that the feature amounts do not match in a case where an interval that is not included in the scale in C major is included.

Furthermore, in a case where the feature amount is the "rhythm", the feature amount matching determination unit 56 determines whether a tempo (such as beats per minute (BPM)) of the sensor signal matches a tempo of the content, for example. Specifically, the feature amount matching determination unit 56 analyzes a temporal change in a sound pressure level of the sensor signal and a sound pressure level of the content signal, detects timing of intensity, a way of taking a beat, and the like, and determines whether these match.

Furthermore, in a case where the feature amount is contents, the feature amount matching determination unit 56 determines, for example, whether the contents uttered by the user 10 match the lyrics information of the content.

Note that the feature amount matching determination unit 56 may analyze the feature amount such as the pitch, the contents, the tone, the chord, or the rhythm of the content signal in real time from the content signal being reproduced, or may acquire the feature amount from metadata included in the content. In addition, the method of determining whether the feature amounts of the sensor signal and the content signal match on the basis of these feature amounts may be a rule-based algorithm or a method using a neural network or the like.

Then, a reproduction control unit 58 controls reproduction of the content on the basis of the output of the utterance detection unit 50 and the output of the feature amount matching determination unit 56. For example, in a case where the output of the utterance detection unit 50 is "present" and the output of the feature amount matching determination unit 56 is "do not match", the reproduction control unit 58 determines that the user 10 utters a sound as a conversation instead of making the utterance according to the content, and stops the content being reproduced. On the other hand, in a case where the output of the utterance detection unit 50 is "present" and the output of the feature amount matching determination unit 56 is "match", the reproduction control unit 58 determines that the user 10 utters a sound according to the content and performs control in such a manner as not to stop the content being reproduced.

Then, an output unit 60 of the acoustic device 100 outputs the voice of the content from the output unit 60 according to a result of the control by the reproduction control unit 58.

Note that the control of the content which control is based on the determination of matching of the feature amounts and described in the second modification example may be performed in combination with the method of determining synchronization of the timing which method is described in the first modification example.

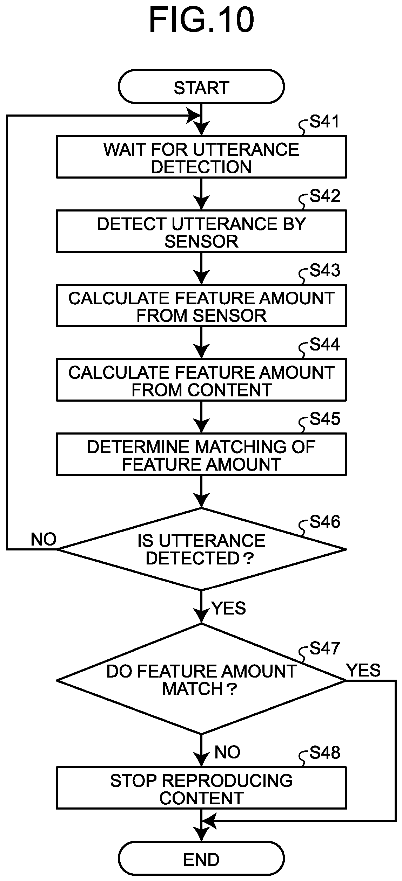

Next, a procedure of the acoustic control processing according to the second modification example will be described with reference to FIG. 10. FIG. 10 is a flowchart illustrating the procedure of the acoustic control processing according to the second modification example.

While reproducing the content, the acoustic device 100 operates an utterance detection function and waits for detection of an utterance (Step S41). That is, the acoustic device 100 performs utterance detection by the sensor (Step S42). Furthermore, the acoustic device 100 calculates a feature amount for a signal observed by the sensor (Step S43).

In parallel, the acoustic device 100 calculates a feature amount in the content being reproduced (Step S44). Then, the acoustic device 100 determines matching between the feature amounts acquired from the sensor and the content, for example, at predetermined time intervals (Step S45).

During this time, the acoustic device 100 determines whether the utterance by the user 10 is detected (Step S46). In a case where the utterance is not detected (Step S46; No), the acoustic device 100 continues the utterance detection.

On the other hand, in a case where the utterance is detected (Step S46; Yes), the acoustic device 100 further determines whether the feature amounts of the utterance and the content match (Step S47). In a case where the feature amounts do not match (Step S47; No), the acoustic device 100 operates the conversation function and stops reproducing the content (Step S48). On the other hand, in a case where the feature amounts match (Step S47; Yes), the acoustic device 100 does not operate the conversation function and ends the current processing. At this time, in a case where the content reproduction continues, the acoustic device 100 may return the processing to Step S41.

As described above, the second determination unit 135 according to the second modification example determines whether to execute control processing related to the content on the basis of the matching degree of the feature amounts of the voice included in the content and the utterance as correlation between the utterance and the content. For example, the second determination unit 135 determines whether to execute the control processing related to the content on the basis of the matching degree in at least one of elements that are the pitch, the tone, the chord, and the rhythm between the utterance and the voice included in the content as the feature amount.

Alternatively, the second determination unit 135 may determine whether to execute the control processing related to the content on the basis of the matching degree between the contents of the utterance and the contents of the voice included in the content as the feature amount. The matching of the contents means, for example, matching of the contents uttered by the user 10 with the lyrics or scripts in the content, matching of the semantic contents of the two, or the like.

As a result, the user 10 can control the conversation function from being activated on the basis of a natural motion such as practicing a song while listening to the content or singing a song while viewing the lyrics.

### (1-4-3. Determination using input of utterance and content)

Next, as a third modification example, processing in which an acoustic device 100 treats both a signal related to an utterance and a signal related to content as input to a machine learning model, and determines whether to control a conversation function on the basis of an output from the model will be described.

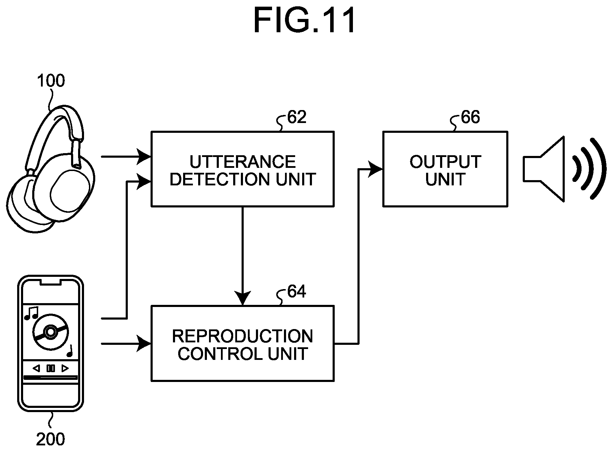

In the embodiment and the like, examples in which the acoustic device 100 detects an utterance on the basis of a sensor signal in the utterance detection unit 22 have been described. On the other hand, since having a configuration in which an utterance detection unit 62 uses both the sensor signal and the content signal as the input, the acoustic device 100 according to the third modification example discriminates between an utterance according to the content and other utterances. This point will be described with reference to FIG. 11 and subsequent drawings.

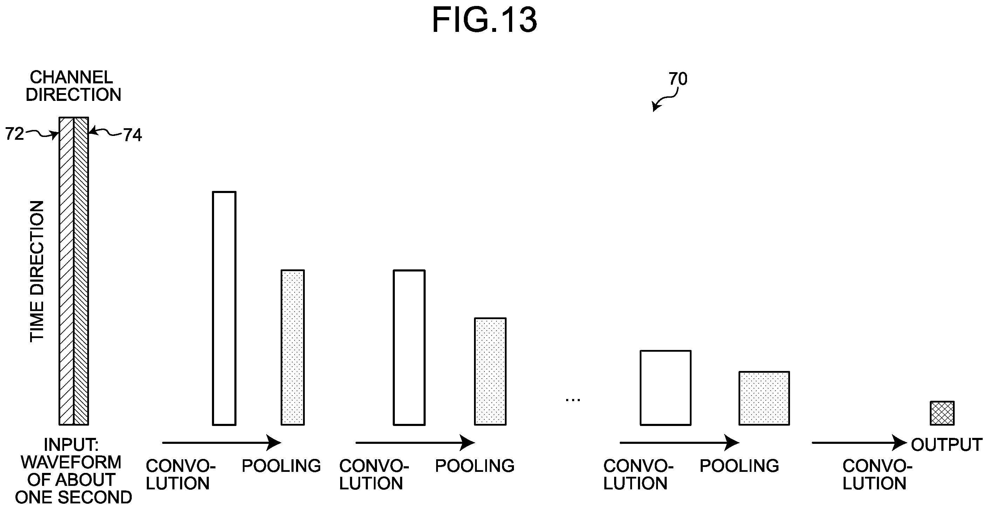

FIG. 11 is a block diagram illustrating an outline of acoustic control processing according to the third modification example. As illustrated in FIG. 13, the acoustic device 100 continues utterance detection processing by the utterance detection unit 62 during content reproduction. In addition, the acoustic device 100 acquires information related to the content from content reproduction equipment 200, and inputs the acquired information to the utterance detection unit 62.

The utterance detection unit 62 can be configured by utilization of, for example, a machine learning model such as a neural network. For example, the acoustic device 100 prepares, as learning data, a large amount of combination data of a sensor signal of when the utterance is made in accordance with the content and a content signal and combination data of a sensor signal of when the utterance is made not in accordance with the content and the content signal. By learning such data, the acoustic device 100 can discriminate, when a combination of a sensor signal and the content signal is newly input, whether the sensor signal is uttered in accordance with the content, and acquire a model capable of detecting only the utterance that is to be originally detected and is uttered not in accordance with the content. As a result, the utterance detection unit 62 can react only to the utterance of the user, which utterance is an element originally desired to be detected, from among various noises such as the utterance of the user, an environmental sound other than the utterance of the user, and an utterance of another person. For example, the acoustic device 100 acquires a model that outputs "1" only in a case where it is discriminated by machine learning that the sensor signal is uttered not in accordance with the content and is to be originally detected, and outputs "0" in other cases including the utterance according to the content.

The acoustic device 100 passes a result of the discrimination by the utterance detection unit 62 to a reproduction control unit 64. For example, in a case where the output of the utterance detection unit 62 is a result discriminating that "the sensor signal (utterance) is not an utterance according to the content but an utterance (conversation or the like) to be originally detected", the reproduction control unit 64 determines that the utterance is not made in accordance with the content by the user 10 and controls to stop the content being reproduced.

Then, an output unit 66 of the acoustic device 100 outputs a voice of the content from the output unit 66 according to a result of the control by the reproduction control unit 64.

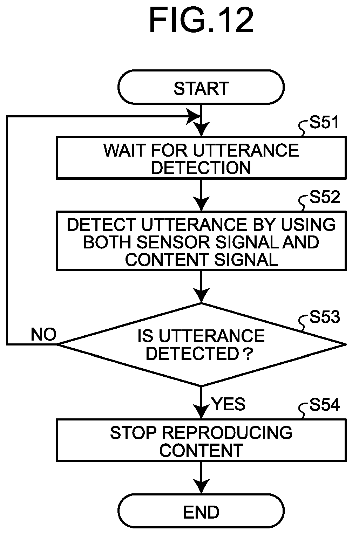

Next, a procedure of the acoustic control processing according to the third modification example will be described with reference to FIG. 12. FIG. 12 is a flowchart illustrating the procedure of the acoustic control processing according to the third modification example.

While reproducing the content, the acoustic device 100 operates an utterance detection function and waits for detection of an utterance (Step S51). At this time, the acoustic device 100 detects the utterance by inputting both the sensor signal and the content signal to the neural network or the like (Step S52).

Then, the acoustic device 100 determines whether the utterance is detected (Step S53). In a case where the utterance is not detected (Step S53; No), the acoustic device 100 continues the utterance detection.

On the other hand, in a case where a normal utterance that is not an utterance according to the content is detected (Step S53; Yes), the acoustic device 100 operates the conversation function and stops reproducing the content (Step S54).

Here, an example of the neural network according to the third modification example will be described. FIG. 13 is a view (1) for describing a configuration of the neural network according to the third modification example.

A model 70 illustrated in FIG. 13 conceptually illustrates a structure of the neural network in the utterance detection unit 62 illustrated in FIG. 11. For example, the model 70 is a convolutional neural network including a plurality of convolution layers and pooling layers. In the example of FIG. 13, in the model 70, time waveforms of a sensor signal 72 and a content signal 74 are bundled in a channel direction to be input. In the model 70, an input signal passes through the plurality of convolution layers and pooling layers, and a scalar value indicating a probability that the user 10 is speaking (provability of making not an utterance according to the content but a normal utterance not according to the content) is output. According to the structure of the model 70, since the time waveforms of both the sensor signal 72 and the content signal 74 are input, the convolution layers and the pooling layers can capture a correlation between the two, and determine whether the utterance is the utterance according to the content or the normal utterance that is not.

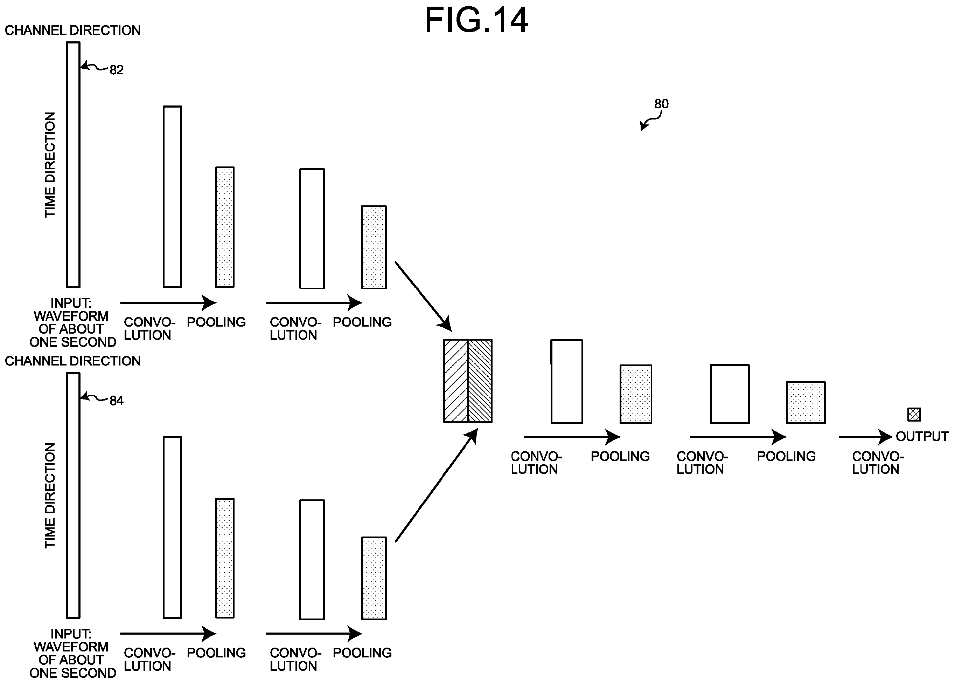

Furthermore, the neural network may have a structure different from that in FIG. 13. This point will be described with reference to FIG. 14. FIG. 14 is a view (2) for describing a configuration of the neural network according to the third modification example.

In a model 80 illustrated in FIG. 14, a plurality of convolution layers and pooling layers is applied to each of a sensor signal 82 and a content signal 84. Then, the model 80 has a structure in which results of the sensor signal 82 and the content signal 84 to which the plurality of convolution layers and pooling layers is applied are combined in an intermediate portion of the network. Since a feature of a superordinate concept such as a frequency or a temporal change is extracted in the intermediate portion of the network, according to such a structure, similarity between the sensor signal 82 and the content signal 84 can be considered by utilization of such a superordinate concept by the combination of the two in the intermediate portion of the network.

Note that although the time waveforms are used as the input in the models illustrated in FIG. 13 and FIG. 14, the structure of the model is not limited thereto. For example, the model may extract frequency information for each time section in advance by short-time Fourier transform or the like and use the frequency information as an input. With such a structure, conversion into the frequency information can be performed in advance. Thus, it is possible to reduce information to be learned by the neural network, and learning can be performed with a relatively small amount of learning data. In addition, it is also effective to use a recursive neural network having a circulation structure therein as the neural network.

As described above, the second determination unit 135 according to the second modification example may determine the matching degree of the feature amounts of the voice included in the content and the utterance by using the machine learning model made to learn the correlation between the feature amounts of the utterance and the content. As a result, the acoustic device 100 can accurately determine whether the utterance is a conversation even for the utterance or the like that is difficult to be detected only with the sensor signal.

### (1-4-4. Feedback by user operation)

Next, as a fourth modification example, processing in which an acoustic device 100 varies a determination criterion on the basis of a feedback by a user 10 will be described.

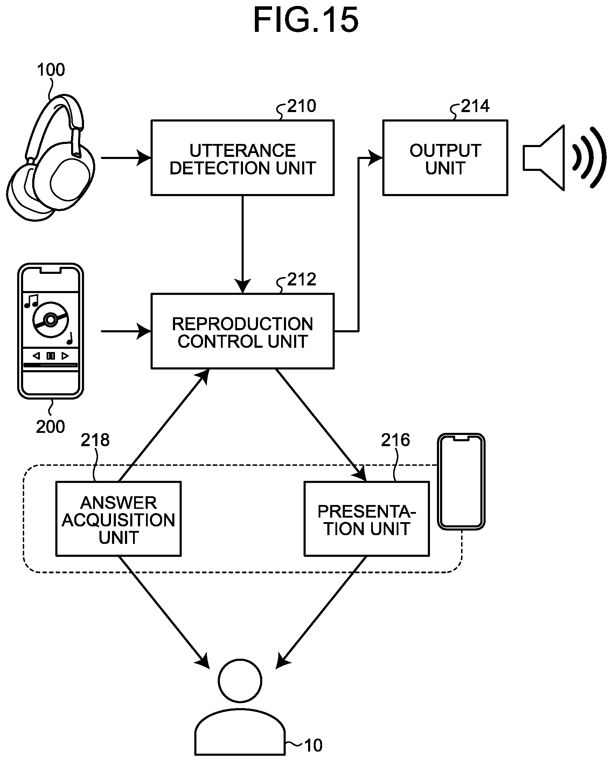

In the embodiment and the like, examples in which the acoustic device 100 controls the conversation function by determining whether an utterance of the user 10 is a conversation has been described. In such processing, when the user 10 utters a sound according to the content, for example, in a case where the user forgets a predetermined gesture or in a case where an utterance detection algorithm does not operate as expected, there is a possibility that the function operates in a mode not intended by the user 10. At this time, the user 10 feeds back the mode of the operation to the acoustic device 100, and the acoustic device 100 adjusts a behavior in response to the result. Thus, the acoustic device 100 can further improve the user experience. This point will be described with reference to FIG. 15 and subsequent drawings.

FIG. 15 is a block diagram illustrating an outline of acoustic control processing according to the fourth modification example. Note that in an example of FIG. 15, it is assumed that a user 10 performs feedback by using a smartphone that is an example of content reproduction equipment 200.

As illustrated in FIG. 15, the acoustic device 100 performs utterance detection by an utterance detection unit 210 during content reproduction. Furthermore, a reproduction control unit 212 operates functions such as stopping content and capturing an external sound on the basis of a result of the utterance detection.

At this time, the content reproduction equipment 200 stops the content reproduction and presents a question as to whether the operation is correct from a presentation unit 216 to the user 10. The presentation unit 216 is, for example, a display screen of the content reproduction equipment 200 connected to the acoustic device 100.

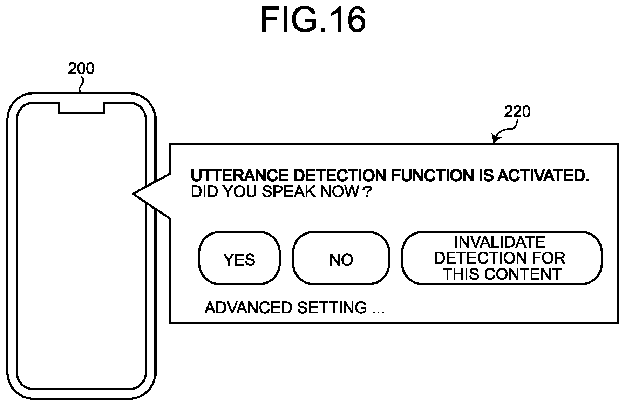

A display example of the presentation unit 216 is illustrated in FIG. 16. FIG. 16 is a view for describing presentation processing according to the fourth modification example. A display example 220 is an example of a message displayed on a screen of content reproduction equipment 200. As illustrated in the display example 220, the content reproduction equipment 200 displays whether the user 10 actually utters a word when an utterance detection function is activated as a question to be presented to the user 10. In response to this, the user 10 selects, for example, one of three options of "Yes", "No", and "invalidate detection for this content".

Note that the answer options are not limited to those illustrated in FIG. 16, and may include, for example, "invalidation for a certain period", "invalidation until power of the device is turned off", "(permanent) invalidation", and the like. Furthermore, although the question by the presentation unit 216 to the user 10 may be displayed every time the utterance is detected, the frequent display may make the user 10 feel uncomfortable. Thus, the content reproduction equipment 200 may calculate a degree of confidence (probability) in discrimination of whether an utterance by the user 10 is an utterance according to the content or an utterance other than that, and ask the question only in a case where a calculation result is unclear. The degree of confidence in the discrimination is calculated, for example, on the basis of the utterance detection processing and the like described in each of the modification examples.

Returning to FIG. 15, the description will be continued. An answer acquisition unit 218 acquires an answer from the user 10. Note that the answer acquisition unit 218 may be a processing unit that acquires the answer via a touch panel or the like included in the content reproduction equipment 200, or may be a processing unit that acquires the answer via a touch sensor or the like included in the acoustic device 100. At this time, in a case where the answer of the user 10 is to "invalidate detection for this content", the reproduction control unit 212 does not stop reproducing the content even when an output indicating that the utterance is detected is acquired from the utterance detection unit 210 until the content being reproduced ends. Note that a change in a behavior according to a result of the answer of the user 10 may include making it difficult to detect the utterance by increasing a threshold of the utterance detection in addition to invalidation of the processing. Specifically, the acoustic device 100 can change a parameter of an algorithm of a neural network used for the detection or change the algorithm itself.

Then, an output unit 214 of the acoustic device 100 outputs a voice of the content from the output unit 214 according to a result of the control by the reproduction control unit 212.

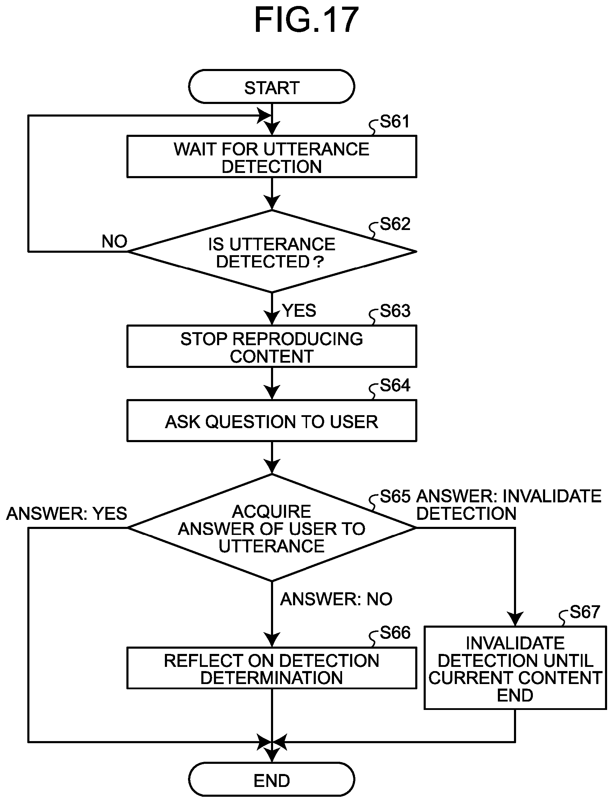

Next, a procedure of the acoustic control processing according to the fourth modification example will be described with reference to FIG. 17. FIG. 17 is a flowchart illustrating the procedure of the acoustic control processing according to the fourth modification example.

While reproducing the content, the acoustic device 100 operates the utterance detection function and waits for detection of an utterance (Step S61). Then, the acoustic device 100 determines whether the utterance is detected (Step S62). In a case where the utterance is not detected (Step S62; No), the acoustic device 100 continues the utterance detection.

On the other hand, in a case where the utterance is detected (Step S62; Yes), the acoustic device 100 operates a conversation function and stops reproducing the content (Step S63). Subsequently, the acoustic device 100 displays a question to the user 10 in order to ask whether it has been appropriate to operate the conversation function (Step S64).

The acoustic device 100 acquires an answer of the user 10 with respect to the utterance (Step S65). In a case where the answer is "Yes", the acoustic device 100 determines that such utterance detection is appropriate and ends the processing. On the other hand, in a case where the answer is "No", the acoustic device 100 determines that such utterance detection is inappropriate, reflects the result in a determination criterion of an algorithm related to the utterance detection, such as a neural network (Step S66), and ends the processing. In this case, the acoustic device 100 may perform restoration processing such as resuming reproduction of the content. Furthermore, in a case where the answer is to "invalidate detection for this content", the acoustic device 100 controls the function to invalidate the detection until an end of the current content (Step S67), and ends the processing.

### (1-4-5. Feedback by gesture)

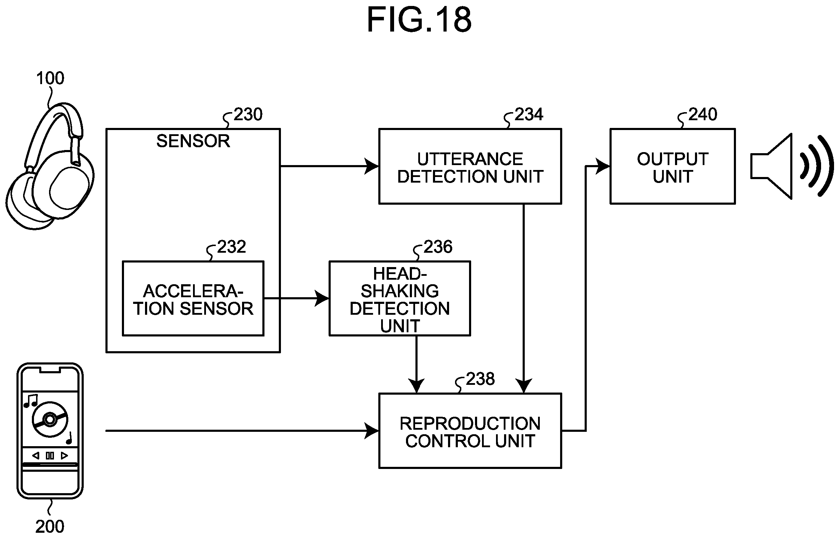

Note that feedback from the user 10 may be performed not by screen operation by the user 10 but by a gesture of the user 10 or the like. For example, in a case where the conversation function unintentionally operates in the acoustic device 100, the user 10 can give feedback indicating that the immediately preceding operation has been inappropriate to the acoustic device 100 by making a gesture such as shaking a head. This point will be described with reference to FIG. 18 and subsequent drawings.

FIG. 18 is a block diagram illustrating an outline of acoustic control processing according to a fifth modification example. In the example of FIG. 18, an acoustic device 100 includes an acceleration sensor 232 as an example of a sensor 230.

The acoustic device 100 performs utterance detection by an utterance detection unit 234 during content reproduction. Furthermore, a reproduction control unit 238 operates functions such as stopping content and capturing an external sound on the basis of a result of the utterance detection.

Here, in a case where the operated function is inappropriate, the user 10 performs a predetermined gesture such as shaking the head sideways. The acoustic device 100 determines that the user 10 shakes his/her head by using a head-shaking detection unit 236 that acquires an output indicating that acceleration equal to or greater than a threshold is detected by the acceleration sensor 232.

The reproduction control unit 238 that acquires the output indicating that the user 10 shakes his/her head by the head-shaking detection unit 236 redetermines that the operation of the conversation function is inappropriate, resumes the reproduction of the content, and performs control in such a manner as not to operate the conversation function until the current content ends.

Then, an output unit 240 of the acoustic device 100 outputs a voice of the content from the output unit 240 according to a result of the control by the reproduction control unit 238.

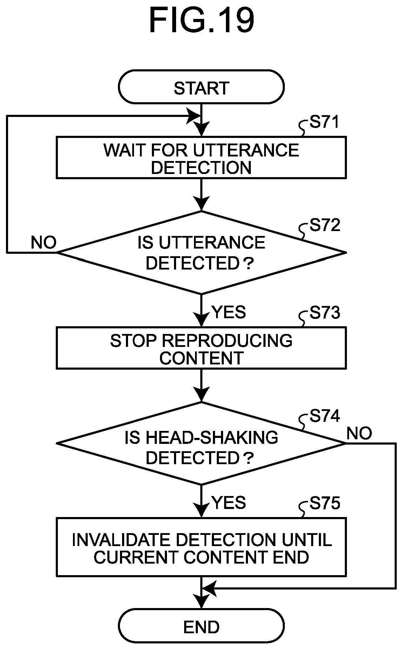

Next, a procedure of the acoustic control processing according to the fifth modification example will be described with reference to FIG. 19. FIG. 19 is a flowchart illustrating the procedure of the acoustic control processing according to the fifth modification example.

While reproducing the content, the acoustic device 100 operates an utterance detection function and waits for detection of an utterance (Step S71). Then, the acoustic device 100 determines whether the utterance is detected (Step S72). In a case where the utterance is not detected (Step S72; No), the acoustic device 100 continues the utterance detection.

On the other hand, in a case where the utterance is detected (Step S72; Yes), the acoustic device 100 operates the conversation function and stops reproducing the content (Step S73). Subsequently, the acoustic device 100 determines whether head-shaking by the user 10 is detected (Step S74).

In a case where the head-shaking is not detected (Step S74; No), in a case where an answer is **"Yes",** the acoustic device 100 determines that such utterance detection is appropriate and ends the processing. On the other hand, in a case where the head shaking is detected (Step S74; Yes), the acoustic device 100 determines that the user 10 has operated the undesired utterance detection, invalidates the detection until the current content ends (Step S75), and ends the processing.

As described above, in a case where control processing related to the content is executed, the second determination unit 135 according to the fourth modification example or the fifth modification example acquires information related to appropriateness/inappropriateness of the control processing related to the content from the user 10, and determines the mode of the control processing related to the content on the basis of the acquired information. For example, as a mode of the control processing related to the content, the second determination unit 135 resumes reproduction of the paused content, adjusts a determination criterion of the control processing, and performs control in such a manner as not to execute the control processing until the content being reproduced ends.

The second determination unit 135 acquires the information related to appropriateness/inappropriateness of the control processing related to the content on the basis of user operation on equipment that controls reproduction of the content. Specifically, the second determination unit 135 acquires feedback from the user 10 on the basis of touch operation by the user 10 on a screen of a smartphone, operation on a touch sensor of the acoustic device 100, or the like.

In addition, the second determination unit 135 may acquire the information related to appropriateness/inappropriateness of the control processing related to the content by detecting a predetermined motion by the user 10. Specifically, the second determination unit 135 acquires feedback from the user 10 on the basis of a gesture of processing such as the head shaking motion by the user 10.

### (1-4-6. Determination based on a content attribute and a viewing mode)

The control processing related to the content by the acoustic device 100 may be executed not only on the basis of the processing based on the algorithm of utterance detection as described above but also on the basis of various conditions and utilization modes.

For example, the acoustic device 100 may automatically turn off the conversation function under a condition in which a possibility that the user 10 utters a sound according to the content is considered to be high, and turn on the function only under a condition in which the possibility is not considered to be high. As a result, the acoustic device 100 can improve usability of the function.

As an example, the acoustic device 100 may automatically turn on/off a function of performing processing corresponding to utterance detection according to a kind of content being reproduced. Note that the kind of content includes all kinds of information for dividing the content, such as a genre of the content, an attribute of the content, and a file format of the content.

For example, the acoustic device 100 determines the kind of content on the basis of metadata or the like of the content being reproduced. Specifically, the acoustic device 100 discriminates the content being reproduced according to each kind such as "music (with vocals)", "music (without vocals)", "music (for karaoke)", "television", "radio", "moving image", "comedy", and "language learning".

Then, in a case where the attribute corresponds to a predetermined condition, the acoustic device 100 automatically turns off the conversation function. For example, the acoustic device 100 automatically turns off the conversation function for content having an attribute for which it is assumed that the user 10 utters a sound in accordance with the content or unintentionally emits a voice. Specifically, in a case where content having the attribute of "comedy" is reproduced, the acoustic device 100 may automatically turn off the conversation function since the user 10 may laugh in accordance with the content. Note that for which attribute the function is stopped may be set by an administrator of the acoustic device 100 or may be arbitrarily set by the user 10.

Furthermore, the acoustic device 100 may automatically turn on and off the function according to a kind of an application or device reproducing the content. For example, in a case where the reproduced application is exclusively used for music appreciation, the acoustic device 100 sets the conversation function not to be turned off. On the other hand, in a case where the reproduced application is exclusively used for communication (for example, it is assumed that a viewer may humble a song or the like in accordance with the moving image), the acoustic device 100 may perform setting in such a manner that the conversation function is turned off. Note that for which application the function is stopped may be set by the administrator of the acoustic device 100 or may be arbitrarily set by the user 10.

In addition, some content reproduction applications have a function of displaying a script (such as lyrics) of content. Then, there is a high possibility that the user 10 sings along the content while using a lyrics display function. Thus, in a case where a utilization mode in which the lyrics are displayed in the application is detected, the acoustic device 100 may perform control to turn off the conversation function while the lyrics are continuously displayed.

Alternatively, the acoustic device 100 may control on/off of the conversation function according to a kind of the device reproducing the content. For example, in a case where the content reproduction equipment 200 is the smartphone, the acoustic device 100 turns on the conversation function on the assumption that there is a high possibility of uttering to another person since the user 10 goes out or moves. On the other hand, in a case where the content reproduction equipment 200 is a stationary personal computer (PC) or the like, the acoustic device 100 may turn off the conversation function on the assumption that the user 10 is not going out or moving and is less likely to utter to another person. Furthermore, the acoustic device 100 may control on/off of the conversation function on the basis of a daily utilization mode. For example, for a user who mainly reproduces music content in a smartphone and mainly reproduces content of comedy or language learning in a PC, the acoustic device 100 can improve usability of the function by switching on/off of the conversation function according to the device. Note that in which device the function is stopped may be set by the administrator of the acoustic device 100 or may be arbitrarily set by the user 10.

Furthermore, as other conditions, the acoustic device 100 may control the conversation function on the basis of time, a location of the user, a behavior of the user, a surrounding noise level, and the like. The location of the user is, for example, a situation such as whether the user is at home, at work, on a vehicle, or the like, and is determined on the basis of, for example, position information acquired by the acoustic device 100. The behavior of the user is a situation of the user, such as sitting, standing, walking, running, riding on a bicycle, riding on a train, or the like of the user, and is estimated by, for example, a vibration sensor or an acceleration sensor of the acoustic device 100. For example, when the user 10 is on a train or when a surrounding noise level is high, there is a low possibility that the user 10 talks to surrounding people while wearing headphones. Thus, the acoustic device 100 may perform control to turn off the conversation function.

Furthermore, the acoustic device 100 may detect whether there is a person around the user 10, and may turn off the conversation function when it is estimated that there is no person to which the user 10 talks in the surroundings. The detection of the surrounding person may be performed by, for example, a motion sensor, a camera, or the like included in the acoustic device 100, the smartphone, or the like, or may be realized by detection of presence of a device used by the surrounding person via a common network. Note that the user 10 may be able to arbitrarily set on/off of the conversation function based on such a condition.

As described above, in the first determination processing by the first determination unit 134, the second determination unit 135 according to the acoustic device 100 may determine whether to execute the control processing related to the content on the basis of the information related to the content or the information related to the application that controls the content.

For example, the second determination unit 135 may determine whether to execute the control processing related to the content on the basis of a kind of the content viewed by the user 10. Alternatively, the second determination unit 135 may determine whether to execute the control processing related to the content on the basis of an operation mode on the application by the user 10 who is viewing the content or contents being displayed in the application.

As described above, the acoustic device 100 can further improve usability related to the function by controlling the function on the basis of various conditions.

### (1-4-7. Mode of a function to be controlled)

Furthermore, the function controlled by the acoustic device 100 is not limited to pausing of the content and capturing of an external sound, and may include various modes. For example, in a case where the kind of the content is content of "language learning", the acoustic device 100 may perform control in such a manner as to make it easier to listen to both the content and a voice of the user 10 by single-ear reproduction, or to perform voice recognition of utterance contents of the user 10 and make a display thereof on the screen of the smartphone.

### (2. Other embodiments)

The processing according to each of the above-described embodiments may be carried out in various different forms other than each of the above-described embodiments.

Also, among the pieces of processing described in the above embodiments, all or a part of the processing described to be automatically performed can be manually performed, or all or a part of the processing described to be manually performed can be automatically performed by a known method. In addition, a processing procedure, specific name, and information including various kinds of data and parameters illustrated in the above document or drawings can be arbitrarily changed unless otherwise specified. For example, various kinds of information illustrated in each of the drawings are not limited to the illustrated information.

In addition, each component of each of the illustrated devices is a functional concept, and does not need to be physically configured in the illustrated manner. That is, a specific form of distribution/integration of each device is not limited to what is illustrated in the drawings, and a whole or part thereof can be functionally or physically distributed/integrated in an arbitrary unit according to various loads and usage conditions. For example, the first determination unit 134 and the second determination unit 135 illustrated in FIG. 6 are not necessarily internal configurations of the acoustic device 100. That is, utterance detection information or gesture detection information by a touch or the like which information is acquired by the acoustic device 100 may be transmitted from the acoustic device 100 to a reproduction control device, and processing such as determination may be performed on a side of the reproduction control device.

Also, the above-described embodiments and modification examples can be arbitrarily combined in a range in which the processing contents do not contradict each other.

Also, the effects described in the present description are merely examples and are not limitations, and there may be another effect.

### (3. Effect of an acoustic device according to the present disclosure)

As described above, the acoustic device according to the present disclosure (acoustic device 100 in the embodiment) includes the detection unit (detection unit 133 in the embodiment), the first determination unit (first determination unit 134 in the embodiment), and the second determination unit (second determination unit 135 in the embodiment). The detection unit detects that the user utters a word during content reproduction. In a case where an utterance is detected by the detection unit, the first determination unit determines whether the control processing related to the content can be executed. In the first determination processing by the first determination unit, the second determination unit determines whether to execute the control processing related to the content by analyzing presence or absence of the predetermined motion by the user or the correlation between the utterance and the content.

As described above, the acoustic device according to the present disclosure detects that the user utters a word, and determines, according to the mode of the user, whether to perform control of the content which control is associated with the detection. As a result, the acoustic device can perform flexible processing such as preventing a function unintended by the user from being operated, or activating the function according to the utterance of the user. Thus, it is possible to perform acoustic control more excellent in user experience.

In addition, the second determination unit determines whether to execute the control processing related to the content by analyzing whether the user touches the touch sensor unit to control the acoustic device as the predetermined motion by the user.

For example, the second determination unit may determine whether to execute the control processing related to the content by analyzing whether the user brings a hand close to a predetermined portion of the acoustic device as the predetermined motion by the user.

Alternatively, the second determination unit may determine whether to execute the control processing related to the content by analyzing whether the user presses the operation unit to control the acoustic device or the content as the predetermined motion by the user.

As described above, the acoustic device determines whether to execute the content control processing according to a gesture, operation, or the like of the user. As a result, the acoustic device can control the function on the basis of the natural motion of the user.

In addition, the second determination unit determines whether to execute the control processing related to the content on the basis of a matching degree of the timing of the voice included in the content and the utterance as the correlation between the utterance and the content.

For example, the second determination unit determines whether to execute the control processing related to the content on the basis of a matching degree of the feature amounts of the voice included in the content and the utterance as the correlation between the utterance and the content.

Specifically, the second determination unit determines whether to execute the control processing related to the content on the basis of a matching degree in at least one of elements that are the pitch, the tone, the chord, and the rhythm between the utterance and the voice included in the content as the feature amount.

Alternatively, the second determination unit determines whether to execute the control processing related to the content on the basis of the matching degree between the contents of the utterance and the contents of the voice included in the content as the feature amount.

In addition, the second determination unit may determine the matching degree of the feature amounts of the voice included in the content and the utterance by using the machine learning model made to learn the correlation between the feature amounts of the utterance and the content.

As described above, the acoustic device determines whether to execute the content control processing on the basis of the correlation between the utterance and the content. As a result, the acoustic device can execute control corresponding to the intention of the user without causing the user to take any triggering action such as performing a specific gesture.

In addition, in a case where the control processing related to the content is executed, the second determination unit acquires the information related to appropriateness/inappropriateness of the control processing related to the content from the user, and determines the mode of the control processing related to the content on the basis of the acquired information.

For example, the second determination unit acquires the information related to appropriateness/inappropriateness of the control processing related to the content on the basis of user operation on equipment that controls reproduction of the content.

Alternatively, the second determination unit may acquire the information related to appropriateness/inappropriateness of the control processing related to the content by detecting a predetermined motion of the user.

As described above, the acoustic device adjusts the determination of the control processing on the basis of the feedback received from the user. As a result, the acoustic device can execute the control processing that more accurately reflects the intention of the user.

Furthermore, the acoustic device may have the following configuration. That is, the detection unit detects that the user utters a word during the content reproduction. In a case where an utterance is detected by the detection unit, the first determination unit determines whether the control processing related to the content can be executed. In the first determination processing by the first determination unit, the second determination unit may determine whether to execute the control processing related to the content on the basis of the information related to the content or the information related to the application that controls the content.

For example, the second determination unit may determine whether to execute the control processing related to the content on the basis of a kind of the content viewed by the user.

Alternatively, the second determination unit may determine whether to execute the control processing related to the content on the basis of the operation mode on the application by the user 10 who is viewing the content or the contents being displayed in the application.

As described above, the acoustic device determines whether to execute the content control processing on the basis of the features and attributes of the content, the utilization mode of the application that reproduces the content, and the like. As a result, since the acoustic device can perform the control processing suitable for a utilization situation of the user, it is possible to provide the user with the control processing that is highly usable for the user.

### (4. Hardware configuration)

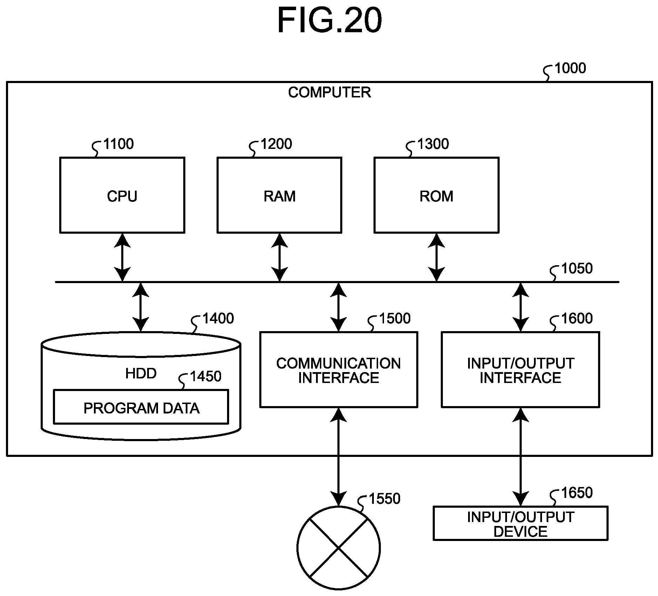

Information equipment such as the acoustic device 100 according to each of the above-described embodiments is realized by, for example, a computer 1000 having a configuration in a manner illustrated in FIG. 20. Hereinafter, the acoustic device 100 according to the embodiment will be described as an example. FIG. 20 is a hardware configuration diagram illustrating an example of a computer 1000 that implements functions of the acoustic device 100. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of programs stored in the ROM 1300 or the HDD 1400, and controls each unit. For example, the CPU 1100 expands the programs, which are stored in the ROM 1300 or the HDD 1400, in the RAM 1200 and executes processing corresponding to the various programs.

The ROM 1300 stores a boot program such as a basic input output system (BIOS) executed by the CPU 1100 during activation of the computer 1000, a program that depends on hardware of the computer 1000, and the like.

The HDD 1400 is a computer-readable recording medium that non-temporarily records the programs executed by the CPU 1100, data used by the programs, and the like. More specifically, the HDD 1400 is a recording medium that records an acoustic control program according to the present disclosure which program is an example of program data 1450.

The communication interface 1500 is an interface with which the computer 1000 is connected to an external network 1550 (such as the Internet). For example, the CPU 1100 receives data from another equipment or transmits data generated by the CPU 1100 to another equipment via the communication interface 1500.

The input/output interface 1600 is an interface to connect an input/output device 1650 and the computer 1000. For example, the CPU 1100 receives data from an input device such as a keyboard or mouse via the input/output interface 1600. Furthermore, the CPU 1100 transmits data to an output device such as a display, speaker, or printer via the input/output interface 1600. Also, the input/output interface 1600 may function as a medium interface that reads a program or the like recorded on a predetermined recording medium (medium). The medium is, for example, an optical recording medium such as a digital versatile disc (DVD) or phase change rewritable disk (PD), a magneto-optical recording medium such as a magneto-optical disk (MO), a tape medium, a magnetic recording medium, a semiconductor memory, or the like.

For example, in a case where the computer 1000 functions as the acoustic device 100 according to the embodiment, the CPU 1100 of the computer 1000 realizes the function of the control unit 130 and the like by executing the acoustic control program loaded on the RAM 1200. Also, the HDD 1400 stores the acoustic control program according to the present disclosure, and the data in the storage unit 120. Note that the CPU 1100 reads the program data 1450 from the HDD 1400 and performs execution thereof. However, these programs may be acquired from another device via the external network 1550 in another example.

Note that the present technology can also have the following configurations.
(1) An acoustic device comprising:
   a detection unit that detects that a user utters a word during content reproduction;
   a first determination unit that determines whether control processing related to the content can be executed in a case where the utterance is detected by the detection unit; and
   a second determination unit that determines whether to execute the control processing related to the content by analyzing presence or absence of a predetermined motion by the user or correlation between the utterance and the content in first determination processing by the first determination unit.
(2) The acoustic device according to (1), wherein
   the second determination unit
   determines whether to execute the control processing related to the content by analyzing whether the user touches a touch sensor unit to control the acoustic device as the predetermined motion by the user.
(3) The acoustic device according to (1) or (2), wherein
   the second determination unit
   determines whether to execute the control processing related to the content by analyzing whether the user brings a hand close to a predetermined portion of the acoustic device as the predetermined motion by the user.
(4) The acoustic device according to any one of (1) to (3), wherein
   the second determination unit
   determines whether to execute the control processing related to the content by analyzing whether the user presses an operation unit to control the acoustic device or the content as the predetermined motion by the user.
(5) The acoustic device according to any one of (1) to (4), wherein
   the second determination unit
   determines whether to execute the control processing related to the content on a basis of a matching degree of timing of a voice included in the content and the utterance as the correlation between the utterance and the content.
(6) The acoustic device according to any one of (1) to (5), wherein
   the second determination unit
   determines whether to execute the control processing related to the content on a basis of a matching degree in a feature amount between a voice included in the content and the utterance as the correlation between the utterance and the content.
(7) The acoustic device according to (6), wherein
   the second determination unit
   determines whether to execute the control processing related to the content on a basis of a matching degree in at least one of elements that are pitch, tone, chord, and rhythm between the utterance and the voice included in the content as the feature amount.
(8) The acoustic device according to (6) or (7), wherein
   the second determination unit
   determines whether to execute the control processing related to the content on a basis of a matching degree between contents of the utterance and contents of the voice included in the content as the feature amount.
(9) The acoustic device according to any one of (6) to (8), wherein
   the second determination unit
   determines the matching degree in the feature amount between the voice included in content and the utterance by using a machine learning model made to learn the correlation in the feature amount between the utterance and the content.
(10) The acoustic device according to any one of (1) to (9), wherein
   the second determination unit
   acquires, in a case where the control processing related to the content is executed, information related to appropriateness/inappropriateness of the control processing related to the content from the user, and determines a mode of the control processing related to the content on a basis of the acquired information.
(11) The acoustic device according to (10), wherein
   the second determination unit
   acquires the information related to appropriateness/inappropriateness of the control processing related to the content on a basis of user operation on equipment that controls reproduction of the content.
(12) The acoustic device according to (10) or (11), wherein
   the second determination unit
   acquires the information related to appropriateness/inappropriateness of the control processing related to the content by detecting a predetermined motion by the user.
(13) An acoustic device comprising:
   a detection unit that detects that a user utters a word during content reproduction;
   a first determination unit that determines whether control processing related to the content can be executed in a case where the utterance is detected by the detection unit; and
   a second determination unit that determines whether to execute the control processing related to the content on a basis of information related to the content or information related to an application that controls the content in first determination processing by the first determination unit.
(14) The acoustic device according to (13), wherein
   the second determination unit
   determines whether to execute the control processing related to the content on a basis of a kind of the content viewed by the user.
(15) The acoustic device according to (13) or (14), wherein
   the second determination unit
   determines whether to execute the control processing related to the content on a basis of an operation mode with respect to the application by the user who is viewing the content or contents being displayed in the application.
(16) An acoustic control method comprising:
   detecting that a user utters a word during content reproduction;
   determining whether control processing related to the content can be executed in a case where the utterance is detected; and
   determining whether to execute the control processing related to the content by analyzing presence or absence of a predetermined motion by the user or correlation between the utterance and the content in processing of determining whether the control processing related to the content can be executed,
   the detecting and determining being performed by a computer.
(17) An acoustic control program causing
   a computer to function as
   a detection unit that detects that a user utters a word during content reproduction,
   a first determination unit that determines whether control processing related to the content can be executed in a case where the utterance is detected by the detection unit, and
   a second determination unit that determines whether to execute the control processing related to the content by analyzing presence or absence of a predetermined motion by the user or correlation between the utterance and the content in first determination processing by the first determination unit.
(18) An acoustic control method comprising:
   detecting that a user utters a word during content reproduction;
   determining whether control processing related to the content can be executed in a case where the utterance is detected; and
   determining whether to execute the control processing related to the content on a basis of information related to the content or information related to an application that controls the content in processing of determining whether the control processing related to the content can be executed,
   the detecting and determining being performed by a computer.
(19) An acoustic control program causing
   a computer to function as
   a detection unit that detects that a user utters a word during content reproduction,
   a first determination unit that determines whether control processing related to the content can be executed in a case where the utterance is detected by the detection unit, and
   a second determination unit that determines whether to execute the control processing related to the content on a basis of information related to the content or information related to an application that controls the content in first determination processing by the first determination unit.

### Reference Signs List

- 10: USER
- 100: ACOUSTIC DEVICE
- 110: COMMUNICATION UNIT
- 120: STORAGE UNIT
- 130: CONTROL UNIT
- 131: ACQUISITION UNIT
- 132: REPRODUCTION CONTROL UNIT
- 133: DETECTION UNIT
- 134: FIRST DETERMINATION UNIT
- 135: SECOND DETERMINATION UNIT
- 200: CONTENT REPRODUCTION EQUIPMENT

## Claims

1. An acoustic device comprising:
a detection unit that detects that a user utters a word during content reproduction;
a first determination unit that determines whether control processing related to the content can be executed in a case where the utterance is detected by the detection unit; and
a second determination unit that determines whether to execute the control processing related to the content by analyzing presence or absence of a predetermined motion by the user or correlation between the utterance and the content in first determination processing by the first determination unit.

2. The acoustic device according to claim 1, wherein
the second determination unit
determines whether to execute the control processing related to the content by analyzing whether the user touches a touch sensor unit to control the acoustic device as the predetermined motion by the user.

3. The acoustic device according to claim 1, wherein
the second determination unit
determines whether to execute the control processing related to the content by analyzing whether the user brings a hand close to a predetermined portion of the acoustic device as the predetermined motion by the user.

4. The acoustic device according to claim 1, wherein
the second determination unit
determines whether to execute the control processing related to the content by analyzing whether the user presses an operation unit to control the acoustic device or the content as the predetermined motion by the user.

5. The acoustic device according to claim 1, wherein
the second determination unit
determines whether to execute the control processing related to the content on a basis of a matching degree of timing of a voice included in the content and the utterance as the correlation between the utterance and the content.

6. The acoustic device according to claim 1, wherein
the second determination unit
determines whether to execute the control processing related to the content on a basis of a matching degree in a feature amount between a voice included in the content and the utterance as the correlation between the utterance and the content.

7. The acoustic device according to claim 6, wherein
the second determination unit
determines whether to execute the control processing related to the content on a basis of a matching degree in at least one of elements that are pitch, tone, chord, and rhythm between the utterance and the voice included in the content as the feature amount.

8. The acoustic device according to claim 6, wherein
the second determination unit
determines whether to execute the control processing related to the content on a basis of a matching degree between contents of the utterance and contents of the voice included in the content as the feature amount.

9. The acoustic device according to claim 6, wherein
the second determination unit
determines the matching degree in the feature amount between the voice included in content and the utterance by using a machine learning model made to learn the correlation in the feature amount between the utterance and the content.

10. The acoustic device according to claim 1, wherein
the second determination unit
acquires, in a case where the control processing related to the content is executed, information related to appropriateness/inappropriateness of the control processing related to the content from the user, and determines a mode of the control processing related to the content on a basis of the acquired information.

11. The acoustic device according to claim 10,
wherein
the second determination unit
acquires the information related to appropriateness/inappropriateness of the control processing related to the content on a basis of user operation on equipment that controls reproduction of the content.

12. The acoustic device according to claim 10,
wherein
the second determination unit
acquires the information related to appropriateness/inappropriateness of the control processing related to the content by detecting a predetermined motion by the user.

13. An acoustic device comprising:
a detection unit that detects that a user utters a word during content reproduction;
a first determination unit that determines whether control processing related to the content can be executed in a case where the utterance is detected by the detection unit; and
a second determination unit that determines whether to execute the control processing related to the content on a basis of information related to the content or information related to an application that controls the content in first determination processing by the first determination unit.

14. The acoustic device according to claim 13,
wherein
the second determination unit
determines whether to execute the control processing related to the content on a basis of a kind of the content viewed by the user.

15. The acoustic device according to claim 13,
wherein
the second determination unit
determines whether to execute the control processing related to the content on a basis of an operation mode with respect to the application by the user who is viewing the content or contents being displayed in the application.

16. An acoustic control method comprising:
detecting that a user utters a word during content reproduction;
determining whether control processing related to the content can be executed in a case where the utterance is detected; and
determining whether to execute the control processing related to the content by analyzing presence or absence of a predetermined motion by the user or correlation between the utterance and the content in processing of determining whether the control processing related to the content can be executed,
the detecting and determining being performed by a computer.

17. An acoustic control program causing
a computer to function as
a detection unit that detects that a user utters a word during content reproduction,
a first determination unit that determines whether control processing related to the content can be executed in a case where the utterance is detected by the detection unit, and
a second determination unit that determines whether to execute the control processing related to the content by analyzing presence or absence of a predetermined motion by the user or correlation between the utterance and the content in first determination processing by the first determination unit.

18. An acoustic control method comprising:
detecting that a user utters a word during content reproduction;
determining whether control processing related to the content can be executed in a case where the utterance is detected; and
determining whether to execute the control processing related to the content on a basis of information related to the content or information related to an application that controls the content in processing of determining whether the control processing related to the content can be executed,
the detecting and determining being performed by a computer.

19. An acoustic control program causing
a computer to function as
a detection unit that detects that a user utters a word during content reproduction,
a first determination unit that determines whether control processing related to the content can be executed in a case where the utterance is detected by the detection unit, and
a second determination unit that determines whether to execute the control processing related to the content on a basis of information related to the content or information related to an application that controls the content in first determination processing by the first determination unit.
